Europäisches Patentamt

European Patent Office

Office européen des brevets

(11) Numéro de publication: **0 282 479 B1**

# FASCICULE DE BREVET EUROPEEN

(45) Date de publication de fascicule du brevet: **18.03.92**    (51) Int. Cl.⁵: **E02B 3/06**

(21) Numéro de dépôt: **86905944.4**

(22) Date de dépôt: **03.10.86**

(86) Numéro de dépôt internationale :
**PCT/MC86/00003**

(87) Numéro de publication internationale :
**WO 87/02725 (07.05.87 87/10)**

(54) PROCEDE ET DISPOSITIF POUR L'ATTENUATION DE LA HOULE.

(30) Priorité: **23.10.85 FR 8515938**

(43) Date de publication de la demande:
**21.09.88 Bulletin 88/38**

(45) Mention de la délivrance du brevet:
**18.03.92 Bulletin 92/12**

(84) Etats contractants désignés:
**AT BE CH DE FR GB IT LI LU NL SE**

(56) Documents cités:
**FR-A- 1 503 543**
**US-A- 2 920 454**
**US-A- 3 846 990**
**US-A- 3 851 476**
**US-A- 4 006 598**

(73) Titulaire: **GOUVERNEMENT MONEGASOUE re-
présenté par LE SERVICE DES TRAVAUX PU-
BLICS MONEGASOUES (DIVISION DES TRA-
VAUX MARITIMES)
en la personne de son Directeur M. René
BOUCHET 8, rue Louis Notari
MC-98000 Monaco(MC)**

(72) Inventeur: **BOUCHET, René
8, rue Louis Notari
MC-98000 Monaco(MC)**
Inventeur: **MANZONE, Jean-Michel
8, rue Louis Notari
MC-98000 Monaco(MC)**

(74) Mandataire: **Levesque, Denys et al
Cabinet Beau de Loménie 55, rue d'Amster-
dam
F-75008 Paris(FR)**

## Description

On sait que de très nombreux secteurs d'activités relevant de l'industrie de la mer, tireraient un grand bénéfice de l'existence d'un dispositif atténuateur de houle qui serait de construction peu coûteuse, ne nécessitant qu'un minimum d'entretien, résistant aux intempéries, n'entravant pas la navigation des bateaux de faible tonnage, et respectant l'esthétique d'un site, et l'intégrité du milieu marin.

Parmi les applications possibles d'un tel dispositif, on peut citer, à titre d'exemples non limitatifs :
- la réduction du clapotis dans les ports et les abris naturels,
- la création de ports artificiels et la protection des installations portuaires déjà existantes, et susceptibles de donner des signes de fatigue,
- la création et la protection d'installations off-shore (plateformes de tous types, digues, brise-lames et réservoirs de stockage immergés, etc...),
- l'amélioration de la sécurité des opérations en mer (déhalage de structures, assemblage d'éléments préfabriqués, récupération des nappes d'hydrocarbure, etc...), et même éventuellement,
- la récupération de l'énergie des vagues et de la houle.

On a déjà proposé un grand nombre de dispositifs tendant à produire des effets de ce genre. On trouve notamment une revue pratiquement exhaustive des études déjà menées sur ce sujet dans le Rapport R 727 édité en mai 1971 par le Département de la Marine des Etats-Unis d'Amérique.

Toutefois, les dispositifs proposés jusqu'à ce jour font appel à des éléments matériels faisant généralement intervenir des obstacles verticaux ou des effets d'amortissement d'origine visqueuse. Or, la houle étant un phénomène ondulatoire, il aurait semblé plus prometteur d'exploiter, pour en viser l'atténuation, des moyens résultant des calculs mathématiques classiques intervenant dans ces phénomènes ondulatoires.

Une première tentative a été faite dans cette direction, et a fait l'objet d'un premier brevet de la Déposante, le FR-A-2576337 déposé le 24-01-85 et publié le 25-07-86, après la date de priorité revendiquée, visant précisément un type complètement nouveau de procédé, conçus à partir de la notion d'un phénomène identifié sous le nom de "mur d'eau oscillant", et dont la création, reposant sur des calculs théoriques de phénomènes ondulatoires de ce genre, permettait déjà d'obtenir dans la pratique les résultats recherchés au moyen d'éléments matériels incontestablement simples, peu coûteux et peu importants.

A cet effet, ce procédé antérieur consistait à créer, à partir de la houle incidente, un phénomène également de nature ondulatoire, se matérialisant sous la forme d'un "mur d'eau oscillant" générant un système d'ondes de radiations dont la composition avec l'onde diffractée présente en aval dudit "mur d'eau oscillant", donnait une résultante nulle ou de faible amplitude.

Sur le plan pratique, les moyens proposés pour la mise en oeuvre de ce procédé consistaient en un caisson parallélépipédique, disposé à une certaine profondeur perpendiculairement à la houle incidente et possédant une masse telle qu'il entre en oscillation avec une amplitude et une phase provoquant l'annulation ou la réduction considérable de l'onde diffractée, présente à l'aval dudit caisson, et ce pour une large plage de périodes de la houle incidente, ce caisson pouvant être constitué d'une simple enveloppe remplie de l'eau du milieu, et dont les dimensions sont telles que ladite masse du caisson soit égale à la masse du volume d'eau déplacé et que ladite enveloppe n'est soumise qu'à des efforts verticaux, et, à la limite, ne même pas posséder de parois latérales, de sorte qu'en définitive ledit "mur d'eau oscillant" est obtenu par immersion d'au moins une dalle d'épaisseur faible par rapport à ses autres dimensions, à une distance du fond telle que la masse d'eau située entre ladite plaque et le fond est égale à ladite masse du caisson et que ladite dalle n'est soumise qu'à des efforts verticaux.

L'inconvénient de cette solution contenu dans son principe même est de ne pas réellement atténuer le phénomène de houle en aval du dispositif, mais seulement de le composer avec un phénomène se produisant également en aval dudit dispositif, de telle sorte que l'obtention d'une résultante nulle ou de faible amplitude était subordonnée à certains facteurs qui, s'ils n'étaient pas respectés, risquaient de rendre le dispositif inopérant.

La présente invention vise à surmonter cet inconvénient grâce à un procédé dans lequel les effets d'atténuation de la houle sont créés non plus en aval mais en amont des moyens mis en oeuvre, de sorte que, l'onde de boule transmise en aval est de toute façon d'amplitude réduite.

En d'autres termes, au lieu d'un "mur d'eau oscillant" créant en aval du dispositif une onde de radiation se composant avec l'onde diffractée pour donner une résultante atténuée ou nulle, le procédé selon l'invention fait appel à un "mur d'eau fixe", créant, en amont du dispositif, une onde réfléchie se composent avec l'onde incidente pour donner une résultante en aval atténuée ou nulle.

A cet effet, l'invention a pour objet un procédé pour provoquer l'atténuation des effets de la houle en vue de la protection de sites maritimes, de ports, d'ouvrages maritimes ou d'installation côtières ou off-shore, suivant lequel on crée, à partir de l'onde de houle incidente, un phénomène de nature ondulatoire qui se matérialise par une réflexion de cette onde de houle incidente, de sorte que l'onde de houle transmise en aval présente une amplitude sensiblement réduite. Selon l'invention, ledit phénomène est créé par formation, au-dessous d'une plaque horizontale fixe faiblement immergée, dont la largeur W n'est pas inférieure à la demi-longueur d'onde L/2 de la houle à atténuer, et au-dessus de laquelle la houle incidente ne peut normalement pas se propager librement, d'un "mur d'eau fixe", c'est-à-dire d'une masse d'eau ne pouvant avoir que des mouvements horizontaux de faible amplitude, qui se comporte comme un obstacle inertiel vis-à-vis de la houle incidente, laquelle se trouve au moins partiellement réfléchie par celui-ci vers l'amont en une onde se composent avec l'onde de houle incidente pour donner une résultante en aval atténuée ou nulle.

Ainsi, la masse d'eau emprisonnée sous la plaque se comporte globalement comme un obstacle inertiel vis-à-vis de le houle incidente, celle-ci étant réfléchie sur ce "mur d'eau fixe" et ce d'autant mieux que son énergie (ou période) est plus faible.

L'invention a également pour objet un dispositif d'atténuation de la houle en un site donné, en vue notamment de le protéger, ce dispositif comportant une plaque faiblement immergée dans la houle incidente, ladite plaque étant maintenue fixe et ses bords amont et aval étant retournés perpendiculairement jusqu'à une cote positive au-dessus de la surface libre.

Un dispositif de ce genre est connu par le document FR-A-1 503 543. Ce dispositif entre en action lorsque les vagues, passant par-dessus le bord amont, voient leur énergie dissipée du fait de leur déferlement qui les fait retomber dans le bassin aménagé entre les bords amont et aval, tandis qu'aucun phénomène particulier propre à atténuer les vagues n'est créé au-dessous du dispositif. Par contre, selon l'invention, la hauteur desdits bords est telle que la houle incidente ne peut se propager librement au-dessus de la plaque, et la largeur W de la plaque, dans la direction de propagation de la houle, est choisie de façon que le rapport L/W, L étant la longueur d'onde de la houle incidente à atténuer, soit au plus égal à 2 environ.

La fixité de la plaque faiblement immergée peut être obtenue par fondation de ladite plaque sur pieux ou piles ou bien par fixation sur câbles tendus, la plaque ayant été dotée d'une flottabilité positive.

Selon une variante de réalisation, le bord amont relevé perpendiculairement à la plaque immergée est arasé à une cote franchissable par les houles moyennes et fortes du site concerné et le bord aval, relevé perpendiculairement à la plaque immergée est percé d'orifices régulièrement espacés, de sorte que lorsqu'une houle moyenne ou forte franchit le bord amont, elle perd une part non négligeable de son énergie en retombent sur le matelas amortisseur constitué par l'eau emprisonnée dans le volume compris entre la plaque inférieure et les bords amont et aval, tandis que la surhauteur d'eau engendrée momentanément dans ce volume est évacuée par lesdits orifices ménagés dans le bord aval.

Sur le plan pratique, ledit, bord amont peut être doté d'un contour en forme de bulbe jusqu'à sa cote d'arase, de manière à limiter les chocs et les efforts horizontaux correspondants à des valeurs inférieures à celles qui seraient générées sur un bord à surface plane perpendiculaire au plan de propagation de la houle incidente.

Selon une autre variante de réalisation, ledit bord amont est constitué par une partie fixe arasée à une cote légèrement positive et surmontée par un dispositif mécanique qui déploie une hausse mobile à l'aide d'un vérin hydraulique ou d'une capacité à air comprimé, de sorte que la hauteur du bord amont, au-dessus de la surface libre de l'eau, puisse être réglée à différents niveaux en fonction de l'amplitude de la houle incidente ou en fonction de la hauteur de la surface libre de l'eau définie par la marée, ou encore puisse être réduite si les efforts horizontaux générés par la houle incidente sur le dispositif devenaient trop importants.

On va maintenant exposer les bases physiques de l'invention, en se référant au cas élémentaire théorique d'une houle se propageant dans un canal de profondeur uniforme.

Si en un point du canal on vient interposer un mur vertical, on sait que la houle va se réfléchir entièrement sur ce mur.

En un point donné, l'onde de houle incidente peut être caractérisée par une surhauteur h (x,t) du plan d'eau (initialement au repos) et une vitesse horizontale U (x,t) suivant l'axe de propagation, qui est la projection sur cet axe de la vitesse des molécules d'eau (qui en fait, comme on le sait, décrivent des cercles).

Le fait d'interposer un mur en un point du parcours impose que U (x,t) = O après le mur, c'est-à-dire que la vitesse horizontale change de sens et on sait que dans ce cas l'onde de houle incidents est bien entièrement réfléchie.

On peut donc considérer que si, au lieu d'interposer un mur, on interpose un dispositif qui impose une réduction de la vitesse horizontale des molécules d'eau, on aura uns rélexion partielle de l'onde de houle et que cette réfléxion sera d'autant meilleure que la réduction de vitesse imposée sera plus forte.

Si l'on considère alors une plaque de longueur non négligeable par rapport à la longueur d'onde et faiblement imemrgée dans le canal, et dont les bords sont relevés perpendiculairement jusqu'à une cote positive au-dessus de la surface libre de manière à éviter tout passage de la houle au dessus de la plaque, du moins tant que l'amplitude de ladite houle reste raisonnable, l'eau qui est emprisonnée entre la plaque et le fond du canal ne peut avoir qu'un mouvement horizontal, c'est-à-dire que la vitesse des molécules d'eau correspondantes ne peut-être qu'horizontale.

Une boule donnée possède une certaine énergie qui se propage par l'intermédiaire de la pression, lorsque cette houle vient heurter la masse d'eau comprise entre la plaque et le fond, elle lui communique une surpression. Cette surpression, appliquée à la face d'entrée de la masse d'eau va lui communiquer une accélération et donc une vitesse. La valeur de cette vitesse dépendra de l'importance de la masse d'eau"freinante" et de l'énergie apportée par la houle incidente (pression à la face d'entrée de la masse d'eau captive).

On peut donc considérer que pour une boule donnée, donc d'énergie donnée, on pourra toujours trouver une largeur de plaque qui permet d'emprisonner une masse d'eau suffisante pour que la vitesse communiquée à cette masse d'eau captive soit suffisamment faible et donc que l'onde de houle incidente soit pratiquement réfléchie à l'entrée du dispositif.

Réciproquement, pour un dispositif donné, c'est-à-dire pour une largeur de plaque fixée, l'énergie apportée par la boule (la pression qui va s'exercer sur la face d'entrée du dispositif) va dépendre de la période de cette houle incidente puisque les houles de petites périodes sont peut énergétiques tandis que les houles de grandes périodes sont plus énergétiques. Ainsi on peut prévoir que les houles de faibles périodes seront considérablement réfléchies tandis que les houles de grandes périodes seront pratiquement transmises.

Un tel dispositif se comportera donc comme un atténuateur de houle d'autant plus performant que les périodes des houles incidentes sont faibles.

Cette interprétation se trouve confirmée par le calcul mathématique qui, appliqué à une dalle de 25m de long immergée à 4m de profondeur sun un fond de 44m se comporte comme un mur réfléchissant entièrement la boule incidente pour les faibles périodes (jusqu'à 5,5 secondes) et un excellent atténuateur de houle pour des périodes plus grandes, allant jusqu'à 9 ou 10 secondes. Ainsi pour une boule de période 7 secondes, le coefficient de transmission n'est encore que de 0,23, c'est-à-dire que 95% de l'énergie de la houle incidente est réfléchie.

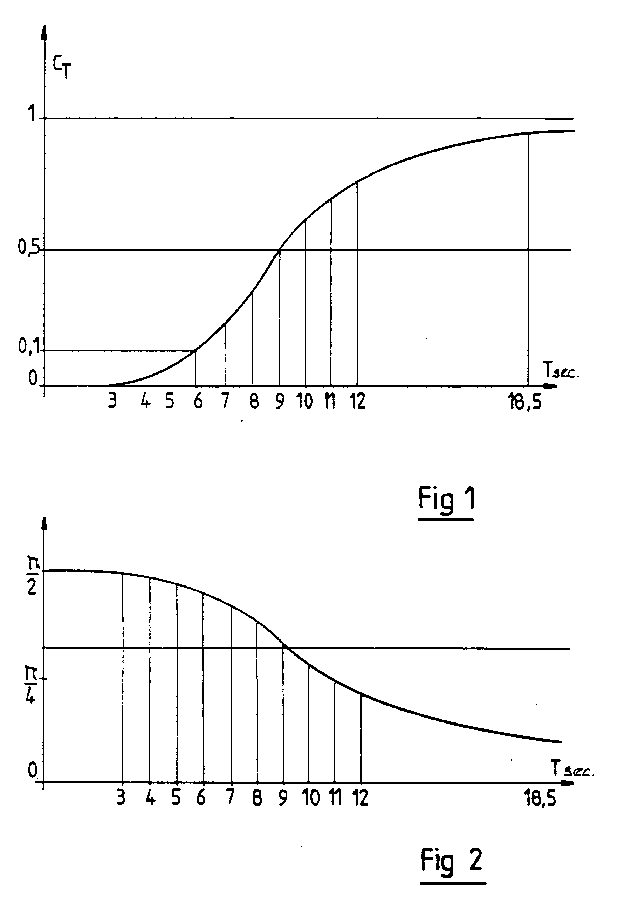

C'est ce qu'expriment les courbes des figures 1 et 2 qui représentent respectivement les variations théoriques du coefficient de transmission CT et du déphasage de la houle en fonction de sa période T (secondes) avec un dispositif tel que défini ci-dessus.

Ces considérations théoriques ont été confirmées par l'expérience.

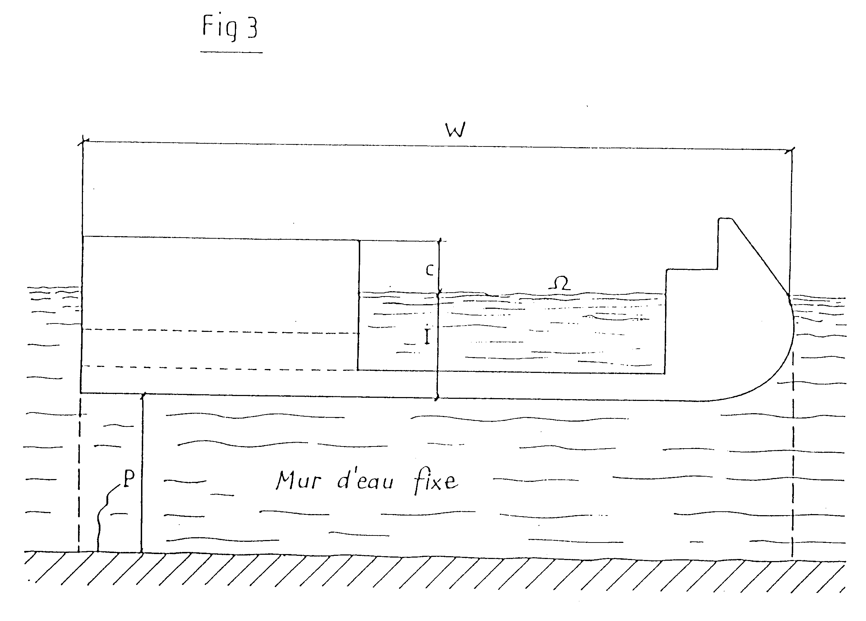

Une telle étude expérimentale a été réalisée sur des modèles réduits de brise lames dont la section transversale est donnée à la figure 3, d'une largeur W, immergée à la profondeur I sur un fond P, et dépassant la surface libre Ω d'une cote positive C.

Parmi les nombreuses configurations examinées, on peut citer :
- plaque de 16m de large, immergée à -2m. Hauteur d'eau 22m. Périodes testées : 4. 5. 6. 7. et 8 secondes. Deux amplitudes par période. Echelle 1/20.
- plaque de 18m de large, immergée à -4m. Hauteur d'eau 44m. Périodes de 6. 7. 8. 9. 10. 12. 18 secondes. Une ou deux amplitudes par période. Echelle 1/40.
- plaque de 25m de large immergée à -4m. Hauteur d'eau 44m. Périodes de 5,2. 6. 7. 8. 9. 10. 12 18 secondes.Une ou deux amplitudes par période. Echelle 1/40.
- plaque de 25m de large immergée à -5m. Hauteur d'eau 44m. Périodes de 6. 7. 8. 9. 10 secondes. Une amplitude par période.

Les coefficients de transmission ont été mesurés et dans de nombreux cas, une analyse de Fourier a été effectuée afin de distinguer ce qui relevait de la période an cours d'examen de ce qui relevait des différents harmoniques.

Des mesures d'efforts ont été effectuées, en outre, sur la plaque de 25m.

L'objectif étant de limiter au maximum les efforts horizontaux, le déflecteur amont a reçu une forme circulaire et on a recherché une cote d'arase la plus faible possible. Des cotes d'arase de + 1.50 ; + 2, + 3 ont été ainsi testées, tant au point de vue hydraulique que des efforts enregistrés.

La cote d'immersion dépend de l'amplitude des houles maxima susceptibles d'atteindre l'ouvrage.

Le bassin de dissipation d'énergie situé en aval de ce déflecteur a été mis en communication avec l'aval.

Le seuil aval, à la cote + 2 a été doté d'une largeur suffisante pour en permettre une utilisation comme voie de promenade ou de circulation. Il peut évidemment être accostable.

Sur le plan hydraulique, les résultats obtenus sont encore nettement plus favorables que ceux résultants des théories classiques (MACAGNO, WIEGEL, etc...) ce qui confirme l'importance déterminante du rapport : L/W : longueur d'onde de la houle en profondeur infinie, sur largeur de la plaque.

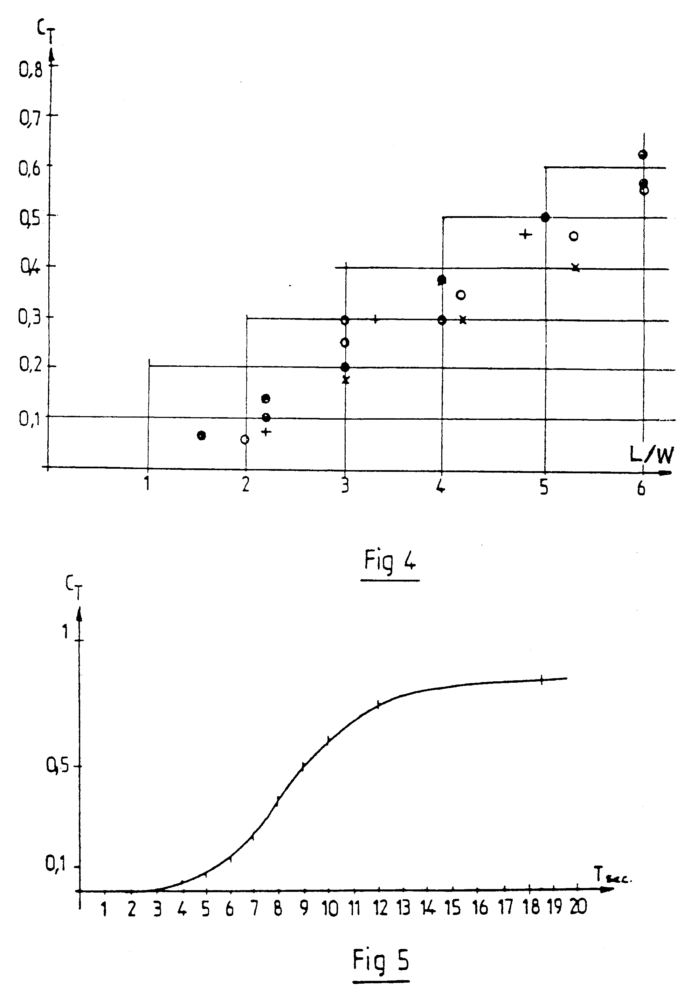

Ainsi, le graphique de la figure 4 fait apparaître les différentes valeurs du coefficient de transmission C_T en fonction du rapport L/W, alors que les profondeurs d'eau, les immersions et les cambrures variaient, réunies au cours d'un grand nombre d'essais.

On a vu plus haut, dans la partie théorique, que l'amplitude des oscillations horizontales de la masse d'eau sous la plaque était fonction de L/W. En dessous d'une certaine période, la vitesse des particules d'eau change de sens avant que le déplacement ne devienne important, si bien que l'énergie cinétique ne peut se transformer en énergie potentielle.

C'est bien ce que les expériences ont mis en évidence. Pour une plaque de 25m de large et des périodes inférieures à 5,5 secondes, les amplitudes du déplacement horizontal sont négligeables.

Pour une houle de 6 secondes et de 3,70 m d'amplitude, les oscillations horizontales ne sont que de 0,60 m environ. Elles atteignent 2,40m environ pour des houles de 8 secondes et de 7m d'amplitude.

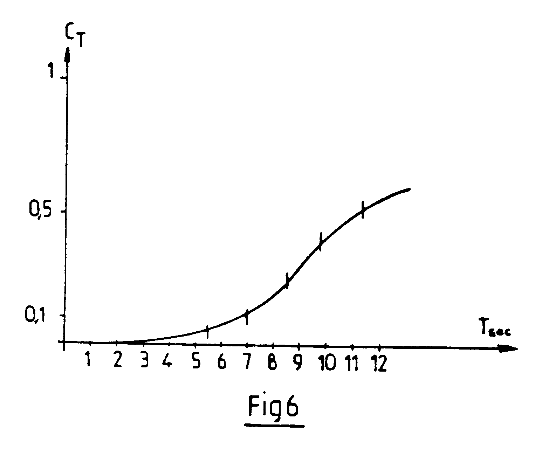

Le graphique de la figure 5 montre les variations du coefficient de transmission C_T en fonction de la période dans la configuration ci-dessus.

On constate une excellente concordance entre la courbe obtenue expérimentalement et la courbe théorique donnée précédemment à la figure 1 pour des périodes comprises entre 0 et 10 secondes. Au delà de 10 secondes la courbe théorique donne des coefficients de transmission légèrement supérieurs à ceux obtenus expérimentalement.

Ceci provient sans doute du fait que dans l'application de la formule de NEWTON qui donne les valeurs théoriques du coefficient de transmission on a négligé les forces de frottement ; celles-ci proportionnelles à la vitesse jouent un rôle plus important pour les grandes périodes pour lesquelles les vitesses sous la plaque sont plus importantes.

Jusqu'à 5,5 secondes (période correspondant à une valeur de L/W de 2), la masse d'eau située sous la plaque demeure pratiquement immobile. Elle se comporte comme un mur vertical fixe et la houle est totalement réfléchie, d'où le nom de "mur d'eau fixe" donné au procédé.

A partir de 6 secondes, période correspondant à une valeur de L/W de 2,2 la masse d'eau commence à osciller mais la houle transmise demeure, dans une large plage, très inférieure à la houle incidente. On note un déphasage entre les mouvements de la houle incidente et du "mur d'eau".

Le coefficient de transmission croît alors, de façon quasi linéaire, au moins jusqu'à des valeurs de L/W de l'ordre de 5. il est d'autant plus faible que l'immersion de la plaque est grande. Les autres facteurs : cambrure de la houle, profondeur relative (profondeur d'eau sur longueur d'onde de la houle incidente) ne paraissent jouer que des rôles secondaires. la cambrure réduirait le coefficient de transmission jusqu'à des valeurs de L/W d'environ 5, l'augmentant au delà.

Le coefficient de transmission peut être encore réduit en augmentant les frottements et en améliorant l'homogénéité et "la solidité" du mur d'eau, ce qui peut être réalisé en disposant une seconde plaque de même largeur sous la première. Le graphique de la figure 6 montre les variations du coefficient de transmission C_T d'un ensemble de 2 plaques de 32 m de largeur placées l'une à -6m, avec un déflecteur à +3m, l'autre -14m, en fonction de la période T.

Quant à la profondeur relative, il faut rappeler que le domaine d'utilisation du procédé est celui des grandes profondeurs. Lors des essais, le rapport profondeur sur longueur d'onde n'a été qu'exceptionnellement inférieur à 1/4, si bien que les houles n'étaient que peu déformées.

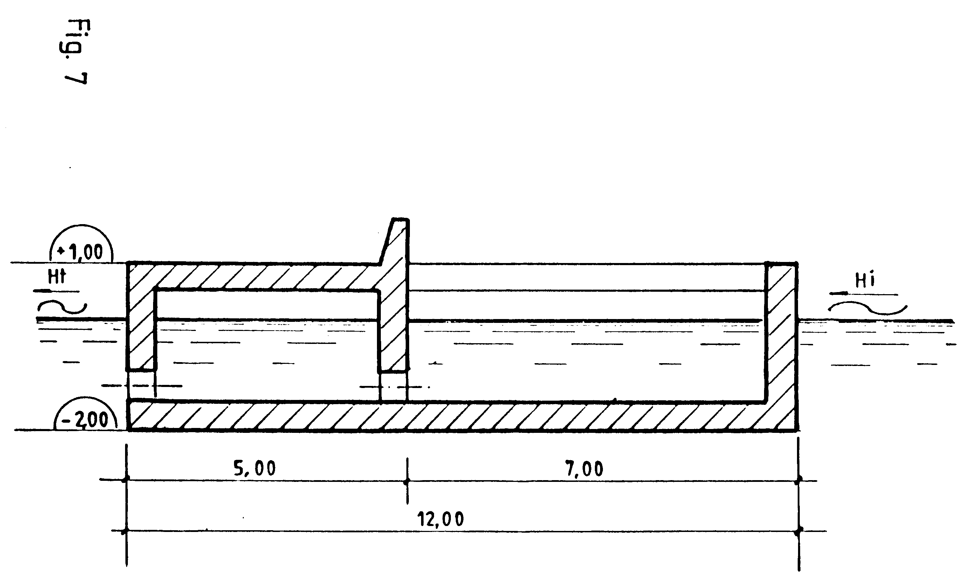

A titre d'illustration de la mise en oeuvre du procédé selon l'invention, on donne ci-après, aux figures 7,8 et 9 trois coupes de brise-lames, le premier adapté à des boules faibles, ne dépassant qu'exceptionnellement une période de 6 secondes et une amplitude de 3 mètres, le second à des boules plus importantes, le troisième à des houles fortes ou à des houles moins importantes dans un site à marée.

Le premier (figure 7), est constitué d'un simple caisson rectangulaire 1 dont le fond 2 est plein, mais dont la face supérieure a été enlevée, aux entretoises près, sur la partie côté large. La cloison intermédiaire 3 et la paroi avant 4 sont percées en 5 et 6. La structure peut être métallique ou en béton avec éventuellement caillebotis en bois. Ses dimensions sont indiquées.

Le caisson peut reposer sur des pieux. Un amarrage sur câbles tendus est envisageable.

Avec un tel caisson, le coefficient de transmission serait inférieur à 0,10 pour des boules inférieures ou égales à 4 secondes, d'environ 0,20 pour des houles de 5 secondes et atteindrait encore 0,50 pour des houles de 6,3 secondes.

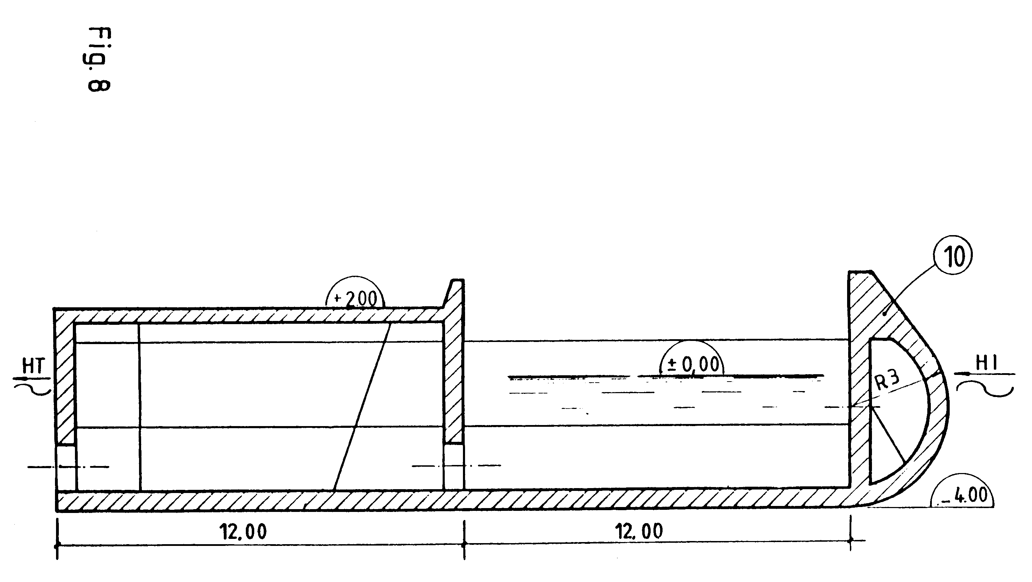

Le second (figure 8) bien adapté à des houles allant jusqu'à 7 secondes et pouvant exceptionnellement atteindre 10 secondes et 10m d'amplitude, a un profil comparable à celui qui a fait l'objet des essais rapportés ci-dessus. Ses dimensions sont également indiquées. Il comporte à l'avant un bulbe 10.

La structure peut être métallique ou en béton.

Le caisson peut reposer sur des pieux verticaux et obliques, ou des colonnes verticales de diamètre suffisantou des piles

Le rendement peut être augmenté, au delà de 7 secondes, et en fonction des boules observées et des résultats souhaités, en augmentant la largeur ou l'enfoncement, ou en disposant, au-dessous du caisson une deuxième plaque de même largeur.

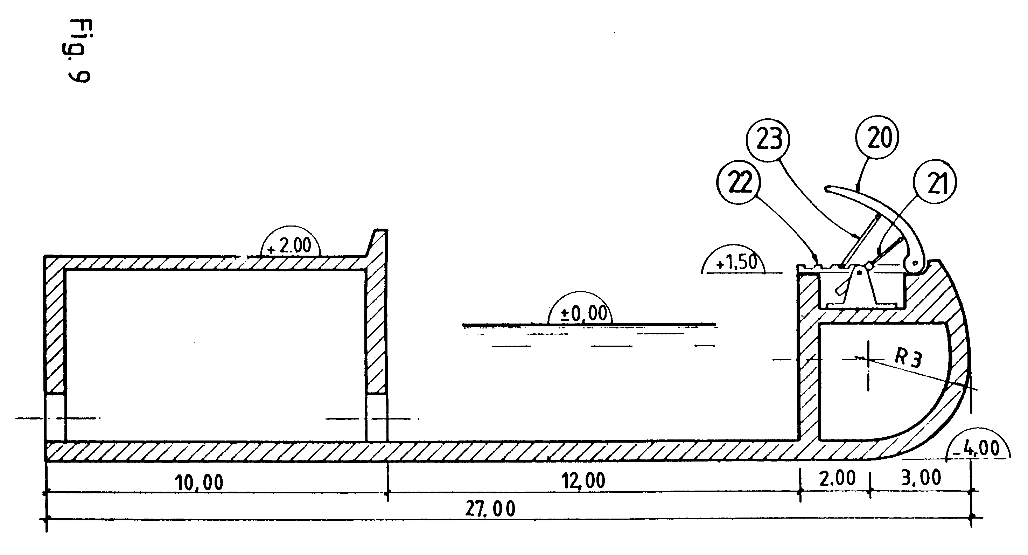

La troisième (figure 9) a pour caractéristique essentielle d'avoir une hauteur de seuil amont réglable.

Cette particularité est intéressante notamment dans le cas d'ouvrages situés en site à marée ou lorsque l'on souhaite adapter au plus près de la houle régnante la hauteur de la cote d'arase du seuil amont, en vue notamment de limiter les efforts horizontaux ou en vue simplement de protéger au mieux l'esthétique du site.

Ce dispositif présente en outre l'avantage de pouvoir baisser à volonté la cote d'arase du seuil et étaler ainsi une houle exceptionnelle sans que les efforts horizontaux générés dans la structure ne deviennent prohibitifs.

La figure montre que le réglage de la cote d'arase du seuil amont peut être obtenu, notamment, par la mise en oeuvre d'une hausse mobile 20, semblable à celles que l'on rencontre dans les barrages à hausse ou barrages à clapets. Le réglage de la hausse peut, par exemple, être obtenu à l'aide d'un vérin hydraulique 21 ou d'une capacité à air comprimé. Les différentes positions de stabilité étant fixées par les différents crans d'une crémaillère horizontale 22 sur laquelle vient s'appuyer un buton 23.

Bien entendu ces réalisations sont données uniquement au titre d'exemples non limitatifs, et de nombreuses autres variantes pourront en être conçues, l'étendue de la protection étant déterminée par la teneur des revendications.

Ainsi, le bord aval du caisson peut être arasé à une cote de l'ordre de 1,50m à 2,00 mètres ou plus et élargi suffisamment pour constituer un quai accostable pour recevoir des navires en eau calmée par le dispositif.

De même la plaque fixe faiblement immergée peut n'être surmontée que par un bord amont faiblement émergeant de sorte que seul ce bord amont soit visible au-dessus de la surface libre de la mer.

Enfin, la fixité de la plaque faiblement immergée peut être obtenue par une fondation de ladite plaque sur pieux ou piles ou bien par fixation de la structure sur câbles tendus après que celle-ci ait été dotée d'une flottabilité positive.

Selon un mode d'exploitation plus sophistiqué de l'invention, les performances obtenues peuvent encore être améliorées par l'adjonction d'une seconde plaque à quelques mètres sous la première.

**Revendications**

1. Procédé pour provoquer l'atténuation des effets de la houle en vue de la protection de sites maritimes, de ports, d'ouvrages maritimes ou d'installation côtières ou off-shore, suivant lequel on crée, à partir de l'onde de houle incidente, un phénomène de nature ondulatoire qui se matérialise par une réflexion de cette onde de houle incidente, de sorte que l'onde de houle transmise en aval présente une amplitude sensiblement réduite,
   caractérisé par le fait que ledit phénomène est créé par formation, au-dessous d'une plaque horizontale fixe faiblement immergée, dont la largeur W n'est pas inférieure à la demi-longueur d'onde L/2 de la houle à atténuer, et au-dessus de laquelle la houle incidente ne peut pas se propager librement, d'un "mur d'eau fixe", c'est-à-dire d'une masse d'eau ne pouvant avoir que des mouvements horizontaux de faible amplitude, qui se comporte comme un obstacle inertiel vis-à-vis de la boule incidente, laquelle se trouve au moins partiellement réfléchie par celui-ci vers l'amont en une onde se composant avec l'onde de boule incidente pour donner une résultante en aval atténuée ou nulle.

2. Dispositif d'atténuation de la houle en un site donné, en vue notamment de le protéger, ce dispositif comportant une plaque faiblement immergée dans la boule incidente, ladite plaque étant maintenue fixe et ses bords amont et aval étant retournés perpendiculairement jusqu'à une cote positive au-dessus de la surface libre,
   caractérisé par le fait que la hauteur desdits bords est telle que la houle incidente ne peut se propager librement au-dessus de la plaque, et que la largeur W de la plaque, dans la direction de propagation de la boule, est choisie de façon que le rapport L/W, L étant la longueur d'onde de la houle incidente à atténuer, soit au plus égal à 2 environ.

3. Dispositif suivant la revendication 2, caractérisé par le fait que la fixité de la plaque faiblement immergée est obtenue par fondation de ladite plaque sur pieux ou piles ou bien par fixation sur câbles tendus, la plaque ayant été dotée d'une flottabilité positive.

4. Dispositif d'atténuation de la houle suivant la revendication 2 ou 3, caractérisé par le fait que le bord amont relevé perpendiculairement à la plaque immergée est arasé à une cote franchissable par les houles fortes du site concerné et que le bord aval, relevé perpendiculairement à la plaque immergée, est percé d'orifices régulièrement espacés de sorte que, lorsque une houle forte franchit le bord amont, elle perd une part non négligeable de son énergie en retombant sur le matelas amortisseur constitué par l'eau emprisonnée dans le volume compris entre la plaque et les bords amont et aval, tandis que l'eau accumulée momentanément dans ce volume est évacuée par lesdits orifices ménagés dans le bord aval.

5. Dispositif d'atténuation de la houle suivant la revendication 4, caractérisé par le fait que le bord amont est doté d'un contour en forme de bulbe jusqu'à sa cote d'arase de manière à limiter les chocs et les efforts horizontaux correspondants à des valeurs inférieures à celles qui seraient engendrées sur un bord à surface plane verticale.

6. Dispositif suivant la revendication 4 ou 5, caractérisé par le fait que le bord amont est constitué par une partie fixe arasée à une cote légèrement positive et surmontée par un dispositif mécanique susceptible de déployer une hausse mobile, de sorte que la hauteur du bord amont, au-dessus de la surface libre de l'eau, peut être réglée à différents niveaux en fonction de l'amplitude de la houle incidente ou en fonction de la hauteur de la surface libre de l'eau définie par la marée, et être éventuellement réduite si les efforts horizontaux engendrés par la houle incidente sur le dispositif devenaient trop importants.

7. Dispositif suivant l'une quelconque des revendications 2 à 6, caractérisé par le fait que le bord aval est élargi de façon à constituer un quai accostable pour recevoir des navires en eaux calmées par le dispositif.

8. Dispositif suivant l'une quelconque des revendications 2 à 7, caractérisé par le fait qu'il comprend une deuxième plaque disposée à distance sous le première.

**Claims**

1. Method for attenuating sea-swell effects for the purpose of protecting maritime sites, harbors, maritime works, or coastal or off-shore installations, according to which is created, from the incident sea swell, a phenomenon of undulatory nature, which is materialized by a reflection of this incident sea swell, such that the sea swell transmitted downstream is of substantially reduced amplitude, characterized by the fact that said phenomenon is created by formation, under a horizontal fixed plate which is slightly immersed and whose width W is not less than the half-wave length L/2 of the swell to be attenuated, and above which the incident swell cannot propagate freely, of a "fixed wall of water", i.e. a mass of water which can only have horizontal movements of small amplitude, which behaves like an inert obstacle with respect to the incident swell, the latter being at least partly reflected by this obstacle towards the upstream into a wave which combines with the incident sea swell in order to give downstream an attenuated or nul resultant.

2. Device for attenuating swell at a given site, in particular for the purpose of protecting it, the device comprising a plate slightly immersed in the incident swell, said plate being held in fixed position with its upstream and downstream edges being raised perpendicularly until a positive height is reached above the free surface, characterized by the fact that the height of said edges is such that the incident swell cannot propagate freely over the plate, and that the width W of the plate, in the direction of propagation of the swell, is selected so that the ratio L/W, L being the wave length of the incident swell to be attenuated, is at the most equal to approximately 2.

3. Device according to claim 2, characterized by the fact that the fixed nature of the slightly immersed plate is obtained by a foundation of said plate on posts or piles or by fixation on the stretched cables, the plate being given positive floatability.

4. Device for attenuating swell according to claim 2 or 3, characterized by the fact that the upstream edge raised perpendicularly to the immersed plate is made level at a height able to be passed over by the strong swells of the site in question and in that the downstream edge, raised perpendicularly to the immersed plate, is pierced with regularly spaced apart orifices, with the result that, when a strong swell passes over the upstream edge, it loses an appreciable part of its energy by dropping on the dropper mattress constituted by the water imprisoned in the volume included between the plate and the upstream and downstream edges, while the water accumulated momentarily in this volume is evacuated through said orifices made in the downstream edge.

5. Device for attenuating swell according to claim 4, characterized by the fact that the upstream edge is provided with a bulb-shaped contour up to its level height, so as to limit the shocks and the corresponding horizontal efforts to values lower than those which would be generated on an edge with flat vertical surface.

6. Device according to claim 4 or 5, characterized by the fact that the upstream edge is constituted by a fixed part made level with a slightly positive height and surmounted by a mechanical device capable of extending a mobile shutter with the result that the height of the upstream edge, above the free surface of the water, may be adjusted to different levels as a function of the amplitude of the incident swell or as a function of the height of the free surface of the water defined by the tide, and may be reduced if the horizontal efforts generated by the incident swell on the device became too great.

7. Device according to any one of claims 2 to 6, characterized by the fact that the downstream edge is widened to constitute a dockable quay to receive ships in water calmed by the device.

8. Device according to any one of claims 2 to 7, characterized by the fact that it comprises a second plate which is some distance beneath the first.

**Patentansprüche**

1. Verfahren zur Bewirkung der Dämpfung der Auswirkung von Dünung zum Schutz von Küstenstandorten, Häfen, maritimen Einrichtungen und Installationen an der Küste oder im offenen Meer, bei dem man ausgehend von der einfallenden Dünung ein Schwingungsphänomen erzeugt, das durch Reflexion der einfallenden Dünung realisiert wird, so daß die Schwingung der in die ursprüngliche Ausbreitungsrichtung transmittierten Dünung eine merklich abgeschwächte Amplitude aufweist, dadurch **gekennzeichnet,** daß das Phänomen dadurch erzeugt wird, daß unterhalb einer horizontalen, festen, leicht eingetauchten Platte, deren Weite W nicht kleiner als die halbe Wellenlänge L/2 der zu dämpfenden Dünung ist, und unter der sich die einfallende Dünung nicht frei ausbreiten kann, eine "feste Wassermauer" gebildet wird, also eine Wassermasse, die lediglich horizontale Bewegungen schwacher Amplitude ausführen kann, die sich gegenüber der einfallenden Dünung wie ein träges Hindernis verhält, wobei die einfallende Dünung durch die Wassermasse entgegen der ursprünglichen Ausbreitungsrichtung zumindest teilweise in eine Welle reflektiert wird, die sich mit der einfallenden Dünung überlagert, so daß sich in die ursprüngliche Ausbreitungsrichtung eine Resultierende ergibt, die gedämpft oder gleich Null ist.

2. Vorrichtung zur Dämpfung einer Dünung an einem vorgegebenen Standort, insbesondere, um diesen zu schützen, wobei die Vorrichtung eine in die einfallende Dünung leicht eingetauchte Platte aufweist, die fest gehalten wird und deren vordere und hintere Kante rechtwinklig abgebogen sind bis zu einem positiven Maß über der freien Oberfläche, dadurch gekennzeichnet, daß die Kanten so hoch sind, daß die einfallende Dünung sich nicht frei über der Platte ausbreiten kann, und daß die Weite W der Platte in Ausbreitungsrichtung der Dünung so gewählt wird, daß das Verhältnis L/W, wobei L die Wellenlänge der einfallenden, zu dämpfenden Dünung ist, größer oder ungefähr etwa 2 ist.

3. Vorrichtung nach Anspruch 2, dadurch gekennzeichnet, daß die Befestigung der leicht eingetauchten Platte dadurch erreicht wird, daß sie auf Pfähle oder Pfeiler gegründet wird, oder durch die Befestigung mit gespannten Seilen, wobei die Platte dann schwimmfähig ausgebildet ist.

4. Vorrichtung zur Dämpfung von Dünung nach Anspruch 2 oder 3, dadurch gekennzeichnet, daß die von der eingetauchten Platte rechtwinklig abgebogene Vorderkante so bemessen ist, daß sie von am betreffenden Standort starken Dünungen überschritten werden kann, und daß die von der eingetauchten Platte rechtwinklig abgebogene Rückkante von regelmäßig beabstandeten Öffnungen durchstoßen ist, so daß dann, wenn eine starke Dünung die Vorderkante übersteigt, die Dünung einen nicht vernachlässigbaren Teil ihrer Energie dadurch verliert, daß sie auf eine Dämpfungsschicht zurückfällt, die durch das Wasser gebildet wird, das im Volumen zwischen der Platte und der vorderen und rückwärtigen Kante eingeschlossen ist, bis das Wasser, das sich momentan im Volumen angesammelt hat, über die in der rückwärtigen Kante vorgesehenen Öffnungen abgeflossen ist.

5. Vorrichtung zur Dämpfung von Dünung nach Anspruch 4, dadurch gekennzeichnet, daß die Vorderkante bis zur Oberkante hin eine wulstartige Form hat, so daß Stöße und horizontale Kräfte auf Werte begrenzt werden, die kleiner sind als diejenigen, die an einer ebenen vertikalen Fläche auftreten.

6. Vorrichtung nach Anspruch 4 oder 5,
dadurch gekennzeichnet,
daß die Vorderkante durch einen festen, auf ein leicht positives Maß begrenzten Teil gebildet wird, der von einer mechanischen Vorrichtung überragt wird, die eine bewegliche Erhöhung ausfahren kann, so daß die Höhe der Vorderkante über der freien Fläche des Wassers auf unterschiedliche Höhen in Abhängigkeit von der Amplitude der einfallenden Dünung geregelt werden kann, oder in Abhängigkeit von der gezeitenabhängigen Wasserhöhe der Wasseroberfläche, wobei die Höhe möglicherweise verringert wird, wenn die durch die einfallende Dünung auf die Vorrichtung ausgeübten Kräfte zu stark werden.

7. Vorrichtung nach einem der Ansprüche 2 bis 6,
dadurch gekennzeichnet,
daß die rückwärtige Kante derart verbreitert ist, daß sie einen zugänglichen Kai bildet, an dem Schiffe auf von der Vorrichtung geruhigtem Wasser anlegen können.

8. Vorrichtung nach einem der Ansprüche 2 bis 7,
dadurch gekennzeichnet,
daß sie eine zweite Platte aufweist, die unter der ersten beabstandet angebracht ist.

Fig 1

Fig 2

Fig 3

W

C

Ω

I

P

Mur d'eau fixe

EP 0 282 479 B1

Fig 4

Fig 5

Fig 6

Fig. 7

EP 0 282 479 B1

Fig. 8

15

Fig. 9